(19) Europäisches Patentamt
European Patent Office
Office européen des brevets

(11) **EP 1 251 462 B1**

(12) **EUROPÄISCHE PATENTSCHRIFT**

(45) Veröffentlichungstag und Bekanntmachung des Hinweises auf die Patenterteilung:
**11.04.2007  Patentblatt 2007/15**

(51) Int Cl.:
***G06T 5/00*** *(2006.01)*

(21) Anmeldenummer: **02100231.6**

(22) Anmeldetag: **08.03.2002**

(54) **Verfahren zum Segmentieren einer in einem Objekt enthaltenen dreidimensionalen Struktur, insbesondere für die medizinische Bildanalyse**

Method for the segmentation of a three-dimensional structure contained within an object, in particular for medical image analysis

Procédé pour la segmentation d'une structure tridimensionelle contenue dans un objet, notamment pour l'analyse d'image médicale

(84) Benannte Vertragsstaaten:
**DE FR GB NL**

(30) Priorität: **09.03.2001  DE 10111661**

(43) Veröffentlichungstag der Anmeldung:
**23.10.2002  Patentblatt 2002/43**

(73) Patentinhaber:
• **Philips Intellectual Property & Standards GmbH**
  **20099 Hamburg (DE)**
• **Koninklijke Philips Electronics N.V.**
  **5621 BA  Eindhoven (NL)**

(72) Erfinder:
• **Kaus, Michael**
  **52066, Aachen (DE)**
• **Hennemuth, Anja**
  **52066, Aachen (DE)**
• **Pekar, Vladimir**
  **52066, Aachen (DE)**
• **Weese, Jürgen**
  **52066, Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
**US-A- 6 106 466          US-B1- 6 201 543**

• **MONTAGNAT ET AL: "GLOBALLY CONSTRAINED DEFORMABLE MODELS FOR 3D OBJECT RECONSTRUCTION" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, Bd. 71, Nr. 2, Dezember 1998 (1998-12), Seiten 173-186, XP000858632 ISSN: 0165-1684**

## Beschreibung

Die Erfindung betrifft ein Verfahren zum Segmentieren einer in einem Objekt enthaltenen dreidimensionalen Struktur aus mindestens einem zweidimensionalen, eine Schicht des Objektes darstellenden Bild mit Hilfe eines deformierbaren Modells, dessen Oberfläche durch ein Netz mit Maschen gebildet wird, die Netzpunkte an der Oberfläche des Modells miteinander verbinden. Außerdem betrifft die Erfindung eine Bildveraibeitungs-Einrichtung zur Durchführung des Verfahrens und ein dafür geeignetes Computerprogramm.

Verfahren dieser Art sind aus einem Aufsatz von McInerney et al. "Deformable models in medical image analysis: a survey" in der Zeitschrift Medical Image Analysis, 1 (2): 91-108, 1996, bekannt. Danach kann man sich ein deformierbares Modell als eine elastische Oberfläche vorstellen, die unter dem Einfluß einer internen Energie und einer externen Energie ihre Form und Position verändern kann. Dabei hat die interne Energie die Aufgabe, die Form des Modells (das aufgrund medizinischen Vorwissens über die zu segmentierende Struktur erzeugt worden sein kann) möglichst gut zu erhalten. Dagegen soll die externe Energie die Modelloberfläche in Richtung der Objektränder bewegen. Die externe Energie wird aus einem dreidimensionalen Bild abgeleitet, d. h. aus einem Datensatz, der das die Struktur enthaltende Objekt räumlich dreidimensional darstellt. Die Maschen haben dabei vorzugsweise die Form eines Dreiecks, dessen Eckpunkte durch drei benachbarte Netzpunkte an der Oberfläche des Modells definiert sind.

Bei dem bekannten Verfahren werden in dem Bild entlang von zu den Dreiecksflächen senkrechten Suchgeraden Strukturpunkte auf der Oberfläche der zu segmentierenden Struktur gesucht; die Oberfläche ist in der Regel durch einen ausgeprägten Gradienten der Bilddaten gekennzeichnet. Nachdem für die Maschen des die Oberfläche des Modells definierenden Netzes solche Strukturpunkte ermittelt worden sind, erfolgt eine Neuberechnung der Netzpunkte des Modells auf Basis der gefundenen Strukturpunkte, und zwar werden die Netzpunkte so berechnet, dass für die neu gefundenen Netzpunkte die gewichtete Summe aus interner und externer Energie ein Minimum annimmt. Bei diesem Verfahren wird die Lage der Netzpunkte nicht nur durch die unmittelbar benachbarten, bei der Suche gefundenen Strukturpunkte beeinflußt, sondern auch von allen anderen Strukturpunkten. Danach wird das Verfahren unter Zugrundelegung der neu berechneten Netzpunkte mehrfach (iterativ) wiederholt. Bei jeder Wiederholung verformt sich das Modell, und die Form, die das Modell nach der letzten Wiederholung eingenommen hat, wird als die zu segmentierende Struktur in dem konkreten Objekt angesehen.

Voraussetzung für dieses bekannte Verfahren ist ein dreidimensionales Bild des Objektes. Bei medizinischen Untersuchungen wird ein derartiges Bild beispielsweise durch ein (Röntgen-)Computertomographie-Verfahren oder durch ein MR-(MR = Magnetresonanz) Verfahren erzeugt. Die Akquisition der Daten für ein dreidimensionales Bild dauert relativ lange, und bei der Computertomographie ist damit zusätzlich eine erhebliche Strahlenbelashmg des Objektes verbunden.

Aufgabe der vorliegenden Erfindung ist es, ein Verfahren der eingangs genannten Art zu schaffen, das nur wenige zweidimensionale Bilder für die Segmentierung einer dreidimensionalen Struktur benötigt; wenige zweidimensionale Bilder können viel schneller (und gegebenenfalls mit viel geringerer Strahlenbelastung) akquiriert werden als ein dreidimensionales Bild.

Erfindungsgemäß wird diese Aufgabe gelöst durch ein Verfahren zum Segmentieren einer in einem Objekt enthaltenen dreidimensionalen Struktur aus mindestens einem zweidimensionalen, eine Schicht des Objektes darstellenden Bild mit Hilfe eines deformierbaren Modells, dessen Oberfläche durch ein Netz mit Maschen gebildet wird, die Netzpunkte an der Oberfläche des Modells miteinander verbinden, mit den Schritten

a) Bestimmen der Maschen, die das Bild schneiden,
b) Suchen je eines auf der Oberfläche der Struktur befindlichen Strukturpunktes, entlang einer die Masche durchsetzenden, in dem Bild verlaufenden Suchgeraden für jede im Schritt a) bestimmte Masche
c) Neuberechnung der Netzpunkte des Modells auf Basis der gefundenen Strukturpunkte,
d) Mehrfache Wiederholung der Schritte a) bis c) unter Zugrundelegung der neu berechneten Netzpunkte.

Bei der Erfindung verlaufen die Suchgeraden, entlang denen Strukturpunkte gesucht werden, in dem Bild (d. h. in der Bildebene) und nicht senkrecht zur Oberfläche der Maschen. Es wird nicht für alle Maschen des Modells ein Strukturpunkt gesucht, sondern nur für diejenigen Maschen, die das Bild schneiden. Gleichwohl genügen die vergleichsweise wenigen auf diese Weise gefundenen Strukturpunkte für eine Neuberechnung aller Netzpunkte - und nicht nur der in der Nähe der wenigen Strukturpunkte befindlichen Netzpunkte. Es wurde gefunden, dass die Qualität der Segmentierung vergleichbar ist mit einer auf Basis eines dreidimensionalen Bildes gefundenen Segmentierung. Da nur relativ wenige Strukturpunkte gesucht werden müssen, benötigt die Segmentierung viel weniger Rechenzeit als bei den bekannten Verfahren.

Anspruch 2 beschreibt eine bevorzugte Ausgestaltung des Verfahrens nach Anspruch 1, wobei die zur Masche senkrechte Gerade (d.h. die Normale auf ein durch drei benachbarte Netzpunkte definiertes Dreieck) auf die Bildebene projiziert wird und dadurch die Suchrichtung definiert. Grundsätzlich sind aber auch andere Suchrichtungen möglich, z.

B. in Richtung des Gradienten des Bildes.

Bei der Ausgestaltung nach Anspruch 3 ist der Bereich der Suchgeraden, auf denen nach einem Strukturpunkt gesucht wird, beschränkt. Diese Beschränkung verkürzt einerseits die Suche und bewirkt auch eine Robustheit gegenüber Rauschen. Anspruch 4 beschreibt die bevorzugte Lage dieses Suchbereichs.

In Anspruch 5 ist eine Bildverarbeitungseinrichtung zur Durchführung des erfindungsgemäßen Verfahrens beschrieben, und Anspruch 6 beschreibt ein Computerprogramm für eine solche Bildverarbeitungseinrichtung.

Die Erfindung wird nachstehend anhand der Zeichnungen näher erläutert. Es zeigen:

Fig. 1    eine zur Ausführung des erfindungsgemäßen Verfahrens geeignete Bildverarbeitungs-Einrichtung in schematischer Darstellung,

Fig 2    ein Ablaufdiagramm des erfindungagemäßen Verfahrens,

Fig 3    die relative Lage eines Modells und zweier Bilder,

Fig 4    einen Teil des Modells und die Ebene eines der Bilder,

Fig 5    ein die Bildebene schneidendes Dreieck in seitlicher Darstellung und

Fig 6    ein solches Dreieck in einer Draufsicht.

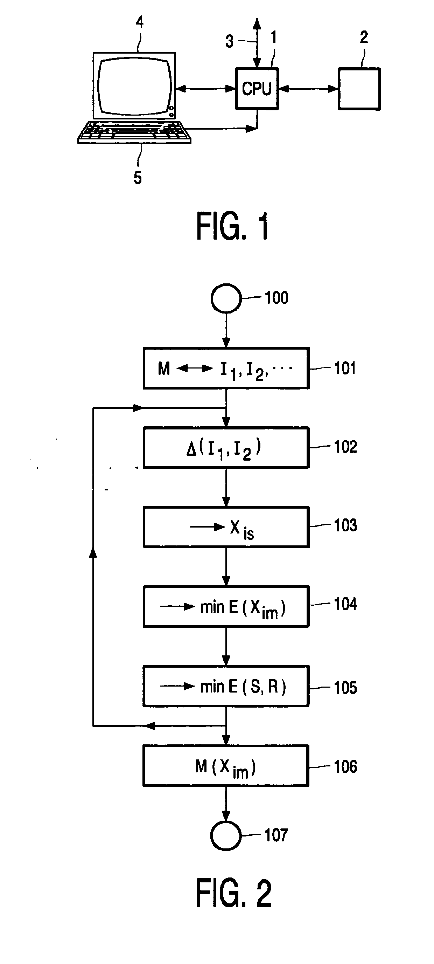

Die in Fig. 1 dargestellte Bildverarbeitungs-Einrichtung umfaßt einen Bildveraibeitungs- und Steuerprozessor 1 mit einem Speicher 2, in dem ein deformierbares Modell einer zu segmentierenden Struktur gespeichert sein kann und der ein oder mehrere zweidimensionale Bilder eines zu untersuchenden Objektes speichern kann. Der Bildverarbeitungs- und Steuerprozessor kann über ein Bussystem 3 mit einer nicht näher dargestellten bildgebenden Einrichtung z. B. einem MR-Gerät oder einem CT-Gerät, gekoppelt sein. Die von dem Bildverarbeitungs- und Steuerprozessor segmentierte Struktur kann auf einem Monitor 4 wiedergegeben weiden. Der Benutzer kann über eine Tastatur 5 oder durch andere, in Fig 1 nicht näher dargestellte Eingabeeinheiten auf den Bildverarbeitungsprozessor zugreifen.

Fig 2 stellt ein Ablaufdiagramm des Computerprogramms dar, nach dem die Bildverarbeitungseinnchtung die Segmentierung einer Struktur ausführt. Nach der Initialisierung im Schritt 100 wird im Schritt 101 das Modell M einer zu segmentierenden Struktur sowie ein oder mehrere Bilder geladen, die eine Schicht eines Objektes darstellen, das eine solche Struktur enthält.

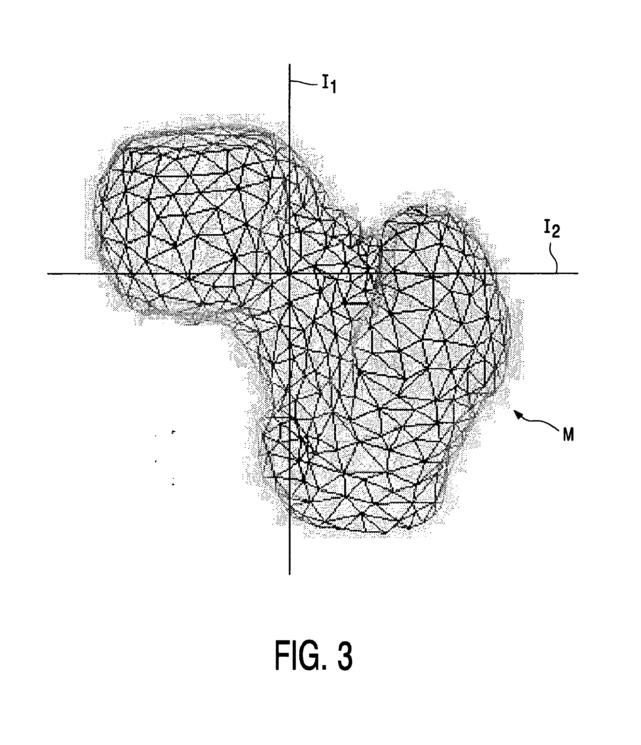

Fig 3 zeigt ein deformierbares Modell M - in diesem Fall das Modell des am oberen Ende des Oberschenkelknochens befindliche Femurkopfes (caput femoris). Selbstverständlich können auch andere Strukturen mit Hilfe eines deformierbaren Modells segmentiert werden, z. B. ein Wirbelkörper in der Wirbelsäule oder ein Organ, z. B. das Herz Die Oberfläche des Objekts wird durch ein Netz gebildet, dessen dreieckförmige Maschen je drei benachbarte Netzpunkte auf der Oberfläche des Modells miteinander verbinden. Anstelle eines in dieser Weise triangulierten Modells könnte die Oberfläche auch durch ein Polygonstruktur definiert sein, bei der die Maschen des Netzes nicht dreieckförmig sind, sondern eine von 3 verschieden Anzahl von Netzpunkten polygonartig miteinander verbinden.

In Fig. 3 sind außerdem die zur Zeichenebene senkrechten Ebenen von zwei zweidimensionalen Bildern $I_1$ und $I_2$ dargestellt, die eine Schicht des Objektes abbilden, in der - neben anderen anatomischen Charakteristika - die zu segmentierende Struktur enthalten ist. Bei diesem Beispiel wird die Struktur mit Hilfe von zwei zueinander senkrechten Bildern segmentiert. Diese Bilder können aber auch anders orientierte Schichten darstellen, z. B. parallele Schichten. Wichtig ist nur, dass sie möglichst viele anatomische Details der Struktur wiedergeben. Wenn statt zweier Bilder drei zweidimensionale Bilder verwendet werden, ergibt sich in der Regel eine noch bessere Segmentierung. Im Prinzip ist es auch möglich, nur ein einziges zweidimensionales Bild zur Segmentierung heranzuziehen, doch wird dabei im allgemeinen die Qualität der Segmentierung reduziert.

In dem Schritt 101 werden zusätzlich die Bilder $I_1$ und $I_2$ einerseits und das Modell M andererseits relativ zueinander so ausgerichtet, dass der Querschnitt des Modells in durch die Bildebenen definierten Querschnittsebenen möglichst gut mit den Konturen der Struktur in den Bildern $I_1$ und $I_2$ übereinstimmt. Von dieser interaktiven Vorgabe ausgehend, läuft das weitere Verfahren automatisch ab.

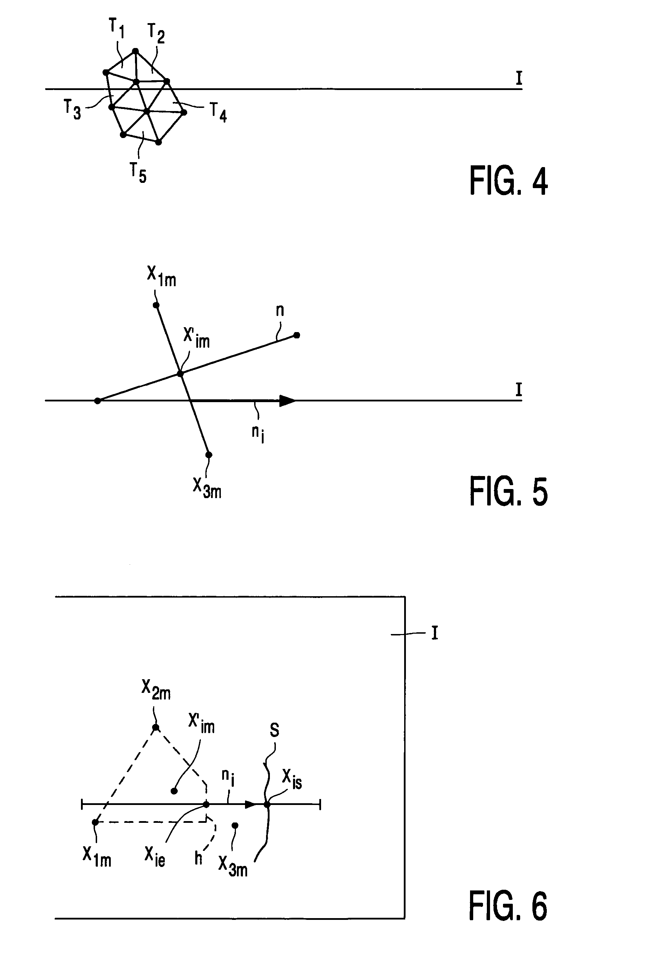

Im Schritt 102 wird-dann untersucht, welche Maschen des die Oberfläche des Modells definierenden Netzes die Ebenen der Bilder $I_1$ oder $I_2$ schneiden, d. h welche Maschen beiderseits der Bildebene befindliche Netzpunkte miteinander verbinden. Dies ist in Fig. 4 dargestellt, wobei die zur Zeichenebene senkrechte Ebene des Bildes mit I bezeichnet ist und wobei die Dreiecke $T_1 \ldots T_5$ einen Teil der dreieckförmigen Maschen des Modells wiedergeben. Alle Eckpunkte der Maschen $T_1$, und $T_2$ liegen oberhalb der Bildebene I - ebenso wie alle Eckpunkte der Masche $T_5$ unterhalb der Bildebene I liegen. Hingegen befinden sich die Eckpunkte der Masche $T_3$ beiderseits der Bildebene - ebenso wie die der Masche $T_4$. Diese Maschen schneiden also die Bildebene I.

Im nächsten Schritt 103 werden für alle eine der Bildebenen schneidenden Maschen Strukturpunkte ermittelt, die sich in den Bildern in der Nähe der betreffenden Masche befinden. Hierzu wird auf Fig. 5 verwiesen, die die zur Zeichenebene senkrechte Bildebene I und die Ebene eines Dreiecks senkrecht zur Zeichenebene darstellt. Von dem Dreieck sind daher nur der Eckpunkt $X_{1m}$ oberhalb der Bildebene I und $x_{3m}$ unterhalb der Bildebene I erkennbar. Das Dreieck schneidet die Bildebene unter einem von 90° verschiedenen Winkel. Infolge dessen durchstößt auch die Normale n auf den Mittelpunkt x'$_{im}$ des Dreiecks die Bildebene schräg und in einem einzigen Punkt. Die Suche nach einem Strukturpunkt in dem Bild wird daher entlang einer Geraden n$_i$ durchgeführt, die in der Bildebene I verläuft und deren Richtung der Richtung der Projektion der Normalen n auf die Bildebene I entspricht (die Projektion der Normalen und die Normale n selbst liegen einer zur Bildebene I senkrechten Ebene).

Ausgangspunkt dieser Suchgeraden n$_i$ ist der Mittelpunkt x$_{ie}$ der Geraden h, in der das Dreieck die Bildebene I schneidet. Wie in Fig 6 angedeutet, bei der die Zeichenebene parallel zur Bildebene verläuft, wird auf der Suchgeraden n$_i$ nur in einem begrenzten Bereich um den Punkt x$_{ie}$ herum gesucht. Dadurch wird die Rechenzeit reduziert, und es wird vermieden, dass relativ weit entfernte (nämlich jenseits des Suchbereichs befindliche) Punkte als Punkte der gesuchten Struktur S identifiziert werden können.

Für den bei der Suche im Schritt 103 gefundenen Strukturpunkt x$_{is}$ gilt dabei die Gleichung

$$x_{is} = x_{ie} + \delta j_i \, n_i \qquad\qquad (1)$$

Dabei ist x$_{ie}$ wie erläutert, der Mittelpunkt des Suchbereichs und der Schnittgeraden h, n$_i$, ein die Richtung der Suchgeraden kennzeichnende Vektor der Länge 1, δ ein dem Abstand zweier auf der Suchgeraden aufeinander folgender Punkte entsprechender Skalar und j$_i$ derjenige ganzzahlige Wert von j, für den die Funktion

$$f(j) = D j^2 \delta^2 - F(x_{ie} + j \delta n_i) \qquad\qquad (2)$$

ein Minimum aufweist. Darin ist D ein geeignet gewählte Konstante und die Funktion F(x) berechnet sich nach der Beziehung

$$F(x) = \pm n_i g(x) \qquad\qquad (3)$$

Darin stellt g(x) den Gradienten des Bild- bzw. Helligkeitswertes in dem Bild an der Stelle x dar. Da die Funktion F(x) danach dem Skalarprodukt der Vektoren n$_i$ und g(x) entspricht, wird sie besonders groß, wenn der Gradient des Bildes in der Suchrichtung verläuft, d.h. wenn die Suchrichtung senkrecht auf die Grenzfläche der Struktur S (vgl. Fig 6) auftrifft (wobei angenommen ist, dass sich an dieser Grenzfläche die Bild- bzw. Helligkeitswerte ändern). Das Vorzeichen der Funktion F(x) in Gleichung 2 ist dabei so gewählt, dass dieser Term im Fall einer wie hier definierten Grenzfläche positiv wird. Durch den Wert D wird sichergestellt, dass die am nächsten beim Ausgangspunkt x$_{ie}$ befindlichen Punkte auf der Struktur bevorzugt werden und das Verfahren stabiler wird Wäre D = 0, wären weit entfernte und nahegelegene Strukturpunkte gleichberechtigt, und dann wäre die Länge des Suchbereichs für die Segmentation ein entscheidender Parameter.

Nachdem auf diese Weise für alle im Schritt 102 ermittelten Dreiecke ein Strukturpunkt x$_{is}$ gefunden worden ist, erfolgt eine Anpassung der Oberfläche des deformierbaren Modells an die gefundenen Strukturpunkte (Schritte 104 und 105). Dabei wird die Lage der Netzpunkte (d. h. der Eckpunkte der Dreiecke) so variiert, dass die sogenannte Energiefunktion

$$E = E_{ext} + \alpha E_{int} \qquad\qquad (4)$$

ein Minimum einnimmt. E$_{ext}$ ist dabei die externe Energie, die das Netz zu den gefunden Strukturpunkten hinzieht, während E$_{int}$ die interne Energie ist, die sich einer Deformation des Netzes zu widersetzen sucht. Die externe Energie E$_{ext}$ berechnet sich dabei nach der Beziehung

$$E_{ext} = \sum_{\Delta} w_i \left( \frac{g(x_{is})}{\|g(x_{is})\|} (x'_{im} - x_{is}) \right)^2 \tag{5}$$

wobei über sämtliche Dreiecke summiert wird $x'_{im}$ bezeichnet die Koordinaten des Mittelpunktes eines Dreiecks $g(x_{is})$ ist der Gradient des Bildes im Strukturpunkt $x_{is}$, und $w_i$ ist ein Wichtungsfaktor, mit dem der Einfluß der Strukturpunkte auf die externe Energie gewichtet wird nach der Beziehung:

$$w_i = \max\left\{0, F(x_{ie} + j\delta n_i) - Dj^2\delta^2\right\} \tag{6}$$

Nach Gleichung 6 ist das Gewicht für alle Dreiecke, für die der zweite Term in der geschweiften Klammer entweder nicht existiert (weil das betreffende Dreieck keine der Bildebenen geschnitten hat) oder negativ ist (weil der gefundene Strukturpunkt die Merkmale der Struktur nur unzureichend enthält) Null. Alle diese Dreiecke (bzw. die ggf. dafür ermittelten Strukturpunkte) liefern also keinen Beitrag zur externen Energie. Die anderen Dreiecke liefern einen Beitrag der Größe $F(x_{ie} + j\delta n_i) - Dj^2\delta^2$, der um so größer ist, je ausgeprägter die Strukturmerkmale im gefundenen Strukturpunkt $x_{is}$ sind Außerdem hängt der Beitrag noch von der Richtung des Gradienten in dem Strukturpunkt in bezug auf den vom Mittelpunkt des Dreiecks zum Strukturpunkt zeigenden Vektor ab; er ist maximal, wenn diese Richtungen parallel oder antiparallel sind.

Die interne Energie $E_{int}$ berechnet sich nach der Beziehung

$$E_{int} = \sum_{i=1}^{K} \sum_{j} ((x_{im} - x_{jm}) - sR\Delta_{ij})^2 \tag{7}$$

Dabei ist s ein Skalierungsfaktor, R ist die Rotationsmatrix und $\Delta_{ij}$ ist der Abstand zwischen dem Netzpunkt $x_i$ und einem benachbarten Netzpunkt $x_j$ - in dem unverformten Modell M. Beim erstmaligen Durchlauf der Schleife ist s = 1, und R entspricht der Einheitsmatrix (d. h. die Diagonalelemente haben den Wert 1 und alle anderen Matrixelemente den Wert 0).

Gleichung 7 besagt, dass über alle K Netzpunkte des Modells summiert wird, wobei jeweils die Abstände zu den umgebenden Netzpunkten $x_{jm}$ zu ermitteln sind Im Schritt 104 werden daher neue Koordinaten $x_{im}$ für das Modell berechnet, derart, dass die nach den Gleichungen 4 bis 7 ermittelte Energie ein Minimum einnimmt (Anmerkung der in Gleichung 5 enthaltene Mittelpunkt $x'_{im}$ eines Dreiecks läßt sich aus den Eckpunkten $x_{im}$ des zugehörigen Dreiecks ableiten). Die Ermittlung der $x_{im}$, für die E ein Minimum hat, läuft auf die Lösung eines linearen Gleichungssystems mit 3K Gleichungen hinaus, wobei K die Zahl der Netzpunkte des Modells ist.

Auf Basis der neu berechneten Koordinaten $x_{im}$ der Netzpunkte wird dann derjenige Skalierungsfaktor s bzw. diejenige Rotation R ermittelt, für die die Energiefunktion gemäß den Gleichung 7 mit den aktualisierten Werten von $x_{im}$ und $x_{jm}$ ein Minimum hat. Die Reihenfolge der Schritte 104 und 105 kann auch vertauscht werden, Beim erstmaligen Durchlaufen der Schleife würde dann die Berechnung der Werte s und R entfallen und erst bei weiteren Durchläufen der Schleife würden s und R neu berechnet. Die beiden Schritte 104 und 105 können auch gleichzeitig durchgeführt werden. Das lineare Gleichungen system wird dann um vier Gleichungen auf 3K+4 Gleichungen erweitert.

Danach wird die Schleife 102 ... 105 erneut durchlaufen, wobei die in den Schritten 104 und 105 ermittelten Werte zugrundegelegt werden. Aufgrund dieser Änderung des Modells können einige der Dreiecke, die vorher nicht eine Bildebene geschnitten haben, nunmehr eine Bildebene schneiden - und umgekehrt. Nachdem die Schleife 102 ... 105 so oft durchlaufen ist, bis ein Abbruchkriterium erreicht ist (beispielsweise, dass sich die Lage der Netzpunkte kaum noch ändert) oder nach einer festen Anzahl (z.B. 30 bis 50) von Durchläufen wird das dann nach mehrfacher Deformierung erhaltene Modell im Schritt 106 gespeichert und auf dem Monitor dargestellt. Dieses deformierte Modell stellt dann die Segmentierung der in den zweidimensionalen Bildern des Objektes erhalten dreidimensionalen Struktur dar - im Ausführungsbeispiel die Segmentierung des Femurkopfes Danach ist das Verfahren beendet.

**Patentansprüche**

1. Verfahren zum Segmentieren einer in einem Objekt enthaltenen dreidimensionalen Struktur aus mindestens einem zweidimensionalen, eine Schicht des Objektes darstellenden Bild ($I_1$, $I_2$) mit Hilfe eines deformierbaren Modells (M), dessen Oberfläche durch ein Netz mit Maschen gebildet wird, die Netzpunkte an der Oberfläche des Modells miteinander verbinden, mit den Schritten

   a) Bestimmen der Maschen ($T_3$, $T_4$), die das Bild ($I_1$, $I_2$) schneiden,
   b) Suchen je eines auf der Oberfläche der Struktur befindlichen Strukturpunktes ($x_{is}$) entlang einer die Masche durchsetzenden, in dem Bild verlaufenden Suchgeraden ($n_i$) für jede im Schritt a) bestimmte Masche
   c) Neuberechnung der Netzpunkte ($x_{im}$) des Modells (M) auf Basis der gefundenen Strukturpunkte ($x_{is}$),
   d) Mehrfache Wiederholung der Schritte a) bis c) unter Zugrundelegung der neu berechneten Netzpunkte.

2. Verfahren nach Anspruch 1, wobei die Richtung der Suchgeraden ($n_i$) der Projektion einer zur Masche senkrechten Geraden auf die Ebene des Bildes entspricht.

3. Verfahren nach Anspruch 1, wobei die Suche nach einem Strukturpunkt auf einen Bereich der Suchgeraden beschränkt ist, der bezüglich der Schnittgeraden h) der Masche mit der Ebene des Bildes symmetrisch ist.

4. Verfahren nach Anspruch 1, wobei die Suchgeraden durch die Mittelpunkte der Schnittgeraden der Maschen mit der Ebene des Bildes verlaufen.

5. Bildverarbeitungs-Einrichtung

   - mit einem Speicher zum Speichern eines deformierbaren Modells, dessen Oberfläche durch ein Netz mit Maschen gebildet wird, die Netzpunkte an der Oberfläche des Modells miteinander verbinden, und zum Speichern wenigstens eines zweidimensionalen, eine Schicht eines Objektes darstellenden Bildes,
   - mit einer Bildwiedergabeeinheit zur Wiedergabe einer segmentierten Struktur, und
   - mit Bildverarbeitungs-MitteLn zum Segmentieren einer in dem Objekt enthaltenen dreidimensionalen Struktur gemäß folgendem Ablauf:

   a) Bestimmen der Maschen, die das Bild scheiden,
   b) Suchen je eines auf der Oberfläche der Struktur befindlichen Strukturpunktes, entlang einer die Masche durchsetzenden, in dem Bild verlaufenden Suchgeraden für jede im Schritt a) bestimmte Masche
   c) Neuberechnung der Netzpunkte des Modells auf Basis der gefundenen Strukturpunkte,
   d) Mehrfache Wiederholung der Schritte a) bis c) unter Zugrundelegung der neu berechneten Netzpunkte.

6. Computerprogramm für Bildveraibeitungseinheit nach Anspruch 5 zum Segmentieren einer in einem Objekt enthaltenen dreidimensionalen Struktur aus mindestens einem zwei dimensionalen, eine Schicht des Objektes darstellenden Bild mit Hilfe eines deformierbaren Modells, dessen Oberfläche durch ein Netz mit Maschen gebildet wird, die Netzpunkte an der Oberfläche des Modells miteinander verbinden, mit den Schritten

   a) Bestimmen der Maschen, die das Bild schneiden,
   b) Suchen je eines auf der Oberfläche der Struktur befindlichen Strukturpunktes, entlang einer die Masche durchsetzenden, in dem Bild verlaufenden Suchgeraden für jede im Schritt a) bestimmte Masche
   c) Neuberechnung der Netzpunkte des Modells auf Basis der gefundenen Strukturpunkte,
   d) Mehrfache Wiederholung der Schritte a) bis c) unter Zugrundelegung der neu berechneten Netzpunkte.

**Claims**

1. A method of segmenting a three-dimensional structure, which is contained in an object, from at least one two-dimensional image ($I_1$, $I_2$) which represents a slice of the object, which method utilizes a deformable model (M) whose surface is formed by a network of meshes which interconnect network points on the surface of the model, and which method includes the steps of:

   a) determining the meshes ($T_3$, $T_4$) which intersect the image ($I_1$, $I_2$),
   b) searching, for each mesh determined in step a), a respective structure point ($x_{is}$), situated on the surface of the structure, along a search line ($n_i$) which traverses the mesh and extends in the image,

c) calculating anew the network points ($x_{im}$) of the model (M) on the basis of the structure points ($x_{is}$) found, and

d) repeating the steps a) to c) a number of times on the basis of the newly calculated network points.

**2.** A method as claimed in claim 1, in which the direction of the search line ($n_i$) corresponds to the projection of a line perpendicular to the mesh onto the plane of the image.

**3.** A method as claimed in claim 1, in which the search for a structure point is limited to a zone of the search line which is symmetrically situated relative to the line of intersection (h) of the mesh and the plane of the image.

**4.** A method as claimed in claim 1, in which the search lines extend through the centers of the lines of intersection of the meshes and the plane of the image.

**5.** An image processing device, which includes

- a memory for storing a deformable model whose surface is formed by a network of meshes which interconnect network points on the surface of the model, and for storing at least one two-dimensional image which represents a slice of an object,
- an image display unit for displaying a segmented structure, and
- image processing means for segmenting a three-dimensional structure which is contained in the object, which segmentation operation is performed as follows:

   a) determining the meshes which intersect the image,
   b) searching, for each mesh determined in step a), a respective structure point, situated on the surface of the structure, along a search line which traverses the mesh and extends in the image,
   c) calculating anew the network points of the model on the basis of the structure points found, and
   d) repeating the steps a) to c) a number of times on the basis of the newly calculated network points.

**6.** A computer program for an image processing unit as claimed in claim 5 for segmenting a three-dimensional structure, which is contained in an object, from at least one two-dimensional image which represents a slice of the object, which computer program utilizes a deformable model whose surface is formed by a network of meshes which interconnect network points on the surface of the model, and which computer program includes the steps of:

   a) determining the meshes which intersect the image,
   b) searching, for each mesh determined in step a), a respective structure point, situated on the surface of the structure, along a search line which traverses the mesh and extends in the image,
   c) calculating anew the network points of the model on the basis of the structure points found, and
   d) repeating the steps a) to c) a number times on the basis of the newly calculated network points.

**Revendications**

**1.** Procédé de segmentation d'une structure tridimensionnelle contenue dans un objet à partir d'au moins une image ($I_1$, $I_2$) bidimensionnelle représentant une couche de l'objet à l'aide d'un modèle déformable (M) dont la surface est formée par un réseau avec des mailles qui relient entre eux les points de réseau à la surface du modèle, comportant les étapes suivantes:

   a) détermination des mailles ($T_3$, $T_4$) qui coupent l'image ($I_1$, $I_2$);
   b) recherche d'un point structurel ($x_{is}$) respectif se trouvant à la surface de la structure le long d'une droite de recherche ($n_i$) traversant la maille et s'étendant dans l'image pour chaque maille déterminée dans l'étape a);
   c) nouveau calcul des points de réseau ($x_{im}$) du modèle sur la base des points structurels trouvés ($x_{is}$);
   d) répétition multiple des étapes a) à c) en se basant sur les points de réseau nouvellement calculés.

**2.** Procédé selon la revendication 1, la direction des droites de recherche ($n_i$) de la projection correspondant à une droite perpendiculaire à la maille sur le plan de l'image.

**3.** Procédé selon la revendication 1, la recherche d'un point structurel étant limitée à une zone de la droite de recherche qui est symétrique par rapport à la droite de coupe h) de la maille avec le plan de l'image.

**4.** Procédé selon la revendication 1, les droites de recherche s'étendant par les points centraux des droites de coupe des mailles avec le plan de l'image.

**5.** Dispositif de traitement de l'image

- avec une mémoire pour l'enregistrement d'un modèle déformable dont la surface est formée par un réseau avec des mailles, qui relient entre eux les points de réseau à la surface du modèle et pour l'enregistrement d'au moins une image bidimensionnelle représentant une couche d'un objet,
- avec une unité de lecture d'image pour la lecture d'une structure segmentée et
- avec des moyens de traitement d'image pour la segmentation d'une structure tridimensionnelle contenue dans l'objet conformément à la procédure suivante:

a) détermination des mailles qui coupent l'image;
b) recherche d'un point structurel respectif se trouvant à la surface de la structure le long d'une droite de recherche traversant la maille et s'étendant dans l'image pour chaque maille déterminée dans l'étape a);
c) nouveau calcul des points de réseau du modèle sur la base des points structurels trouvés;
d) répétition multiple des étapes a) à c) en se basant sur les points de réseau nouvellement calculés.

**6.** Programme informatique pour l'unité de traitement d'image selon la revendication 5 pour la segmentation d'une structure tridimensionnelle contenue dans un objet à partir d'au moins une image bidimensionnelle représentant une couche de l'objet à l'aide d'un modèle déformable dont la surface est formée par un réseau avec des mailles qui relient entre eux les points de réseau à la surface du modèle, comportant les étapes suivantes:

a) détermination des mailles qui coupent l'image;
b) recherche d'un point structurel respectif se trouvant à la surface de la structure le long d'une droite de recherche traversant la maille et s'étendant dans l'image pour chaque maille déterminée dans l'étape a);
c) nouveau calcul des points de réseau du modèle sur la base des points structurels trouvés;
d) répétition multiple des étapes a) à c) en se basant sur les points de réseau nouvellement calculés.

FIG. 1

FIG. 2

FIG. 3

FIG. 4

FIG. 5

FIG. 6